# EUROPÄISCHE PATENTSCHRIFT

(11) **EP 1 373 028 B1**
(45) Veröffentlichungstag und Bekanntmachung des Hinweises auf die Patenterteilung: **13.10.2004**
(21) Anmeldenummer: 02722159.7
(22) Anmeldetag: 28.02.2002
(51) Int. Cl.: B60R 21/20

(54) **ANORDNUNG EINES AIRBAGMODULS**
ARRANGEMENT OF AN AIRBAG MODULE
AGENCEMENT D'UN MODULE DE COUSSIN GONFLABLE

(30) Priorität: 30.03.2001 DE 10115803
(43) Veröffentlichungstag der Anmeldung: 02.01.2004
(73) Patentinhaber: Bayerische Motoren Werke Aktiengesellschaft, 80809 München (DE)
(72) Erfinder: WEISS, Olaf, 85402 Kranzberg (DE); HEINL, Martin, 83646 Bad Tölz (DE)
(86) Internationale Anmeldenummer: PCT/EP2002/002153
(87) Internationale Veröffentlichungsnummer: WO 2002/079007

(56) Entgegenhaltungen:
- DE-A- 19 913 041
- DE-A- 19 949 170

## Beschreibung

Die Erfindung bezieht sich auf eine Anordnung eines Airbagmoduls hinter der Instrumententafel eines Kraftfahrzeuges, wie sie im Oberbegriff des Hauptanspruchs beschrieben ist.

Aus der DE 199 13 041 A1 ist eine gattungsgemäße Anordnung bekannt. Das Airbagmodul ist an einem im Fahrzeug quer verlaufenden Tragrohr der vorderen Karosseriestruktur befestigt. In einem Hohlkörper hinter der Instrumententafel liegt der gefaltete Luftsack. Der Hohlkörper geht in eine als Schusskanal dienende Adapterblende über, die an der Rückseite der Instrumententafel befestigt ist. Eine solche Anordnung hat den Nachteil, dass die Toleranzen zwischen dem Tragrohr und der Instrumententafel über die Befestigungsbauteile des Airbagmoduls ausgeglichen werden müssen. Außerdem sind geeignete Maßnahmen zu ergreifen, um bei einem Zünden des Airbags die Relativbewegungen zwischen Instrumententafel und Airbageinheit möglichst gering zu halten. Anderenfalls besteht die Gefahr, dass der Luftsack verhakt und sich möglicherweise teilweise hinter der Instrumententafel entfaltet. Aus den Dokument DE 199 49 170 A1 ist eine Anordnung eines Airbags nach dem Oberbegriff des Anspruchs 1 bekannt.

Aufgabe der Erfindung ist es, eine gattungsgemäße Anordnung so auszubilden, dass sie sich einfach und ohne besondere Berücksichtigung der Bauteiltoleranzen montieren lässt und im Auslösefall sich die Relativbewegungen zwischen Instrumententafel und Airbageinheit in Grenzen halten.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung sind der Schusskanal und das Airbagmodul voneinander getrennt. Der Schusskanal ist dabei an der Rückseite der Instrumententafel befestigt, während das Airbagmodul karosseriefest, vorzugsweise auf einem Tragrohr der Karosseriestruktur sitzt. Auf diese Weise lässt sich zunächst das Airbagmodul montieren und anschließend wird die Instrumententafel eingesetzt. Dabei stülpt sich der daran befestigte Schusskanal über den Luftsack-Austrittsbereich des Airbagmoduls. Die beiden Teile sind nicht aneinander befestigt und lassen sich damit gegeneinander verschieben, was im Auslösefall des Airbags zu den erwähnten unerwünschten Relativbewegungen führen würde. Dies wird jedoch durch die Verrastung am Schusskanal und dem karosseriefesten Hakenteil verhindert. Die beiden Teile sind so angeordnet, dass das Hakenteil im Auslösefall den Schusskanal über die Verrastung zurückhält.

Vorteilhafte Ausgestaltungen der Erfindung ergeben sich aus der nachfolgenden Beschreibung anhand der dazugehörenden Zeichnung. Es zeigen
- **Figur 1**: in perspektiver Darstellung eine Instrumententafel eines Kraftfahrzeuges und
- **Figur 2**: eine Schnittdarstellung entlang der Schnittlinie II-II nach Fig.1, in vergrößertem Maßstab.

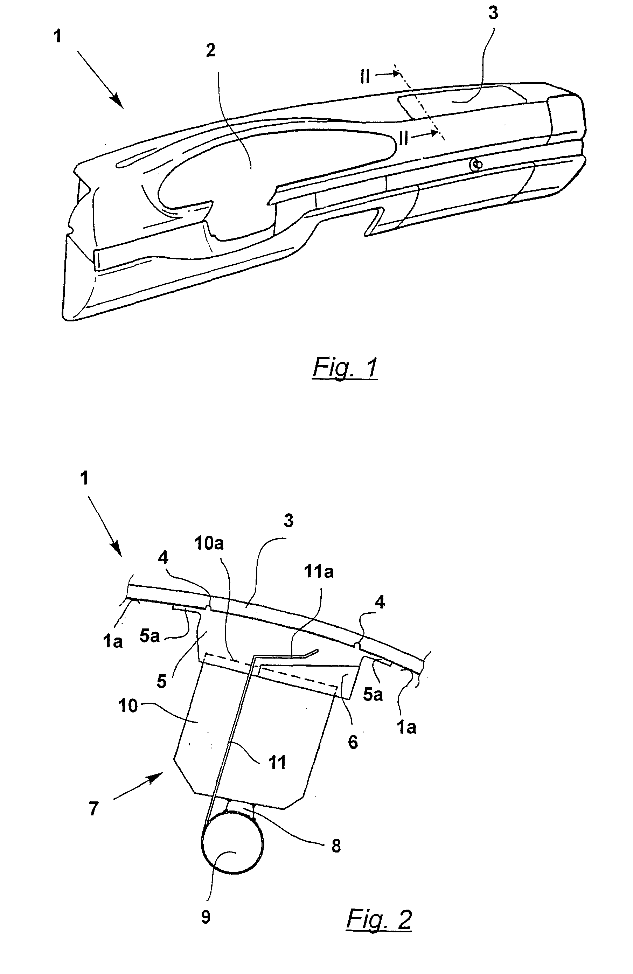

Die in **Figur 1** gezeigte Instrumententafel 1 eines Kraftfahrzeuges ist lediglich schematisch dargestellt, das heißt, die wesentlichen Einbauten wie Instrumente usw. fehlen. Ebenso wenig sind die die Instrumententafel umgebenden Karosserieabschnitte dargestellt. Demgegenüber ist auf der Fahrerseite eine Öffnung 2 erkennbar mit einem oberen Bereich, der bei vollständig montierter Instrumententafel die Instrumente aufnimmt. Ein unterer Abschnitt der Öffnung 2 erlaubt den Durchtritt einer nicht weiter dargestellten Lenksäule.

Auf der Beifahrerseite weist die Instrumententafel 1 eine mit einer Abdeckung 3 verschlossene Öffnung auf; sie dient dem Austritt eines Luftsacks eines noch näher zu beschreibenden Airbagmoduls. In der **Figur 1** scheint die Abdeckung 3 als eine von der übrigen Außenhaut der Instrumententafel 1 getrennte Klappe zu sein. Diese Darstellungsart ist aber nur aus Verständnisgründen gewählt, sie soll den Austrittsort des Luftsacks lokalisieren. Tatsächlich ist, wie **Figur 2** zeigt, die Abdeckung integraler Bestandteil der Außenhaut und lediglich an der Rückseite durch eine umlaufende Nut 4 im Querschnitt geschwächt.

**Figur 2** zeigt des Weiteren einen Schusskanal 5, der mit Befestigungsabschnitten 5a an der Rückseite 1a der Instrumententafel 1 festgelegt ist. Der Schusskanal 5 weist die Form eines Rechteckkanals auf (in **Figur 2** nicht erkennbar) und ist so dimensioniert, dass er mit seiner lichten Weite die Abdeckung 3 mit kleinem Abstand umgreift. Die Abdeckung 3 liegt damit vollständig innerhalb der Kanalöffnung. An der Außenseite ist eine Kanalwand zu einer Verrastung 6 ausgeformt, die in Kanalrichtung schräg zur Rückseite der Instrumententafel ansteigt.

Ein lediglich angedeutetes Airbagmodul 7 ist über eine Verankerung 8 an einem Tragrohr 9 befestigt. Das Tragrohr 9 gehört zur vorderen Karosseriestruktur des Kraftfahrzeuges und verläuft quer zur Fahrtrichtung zu den beiden A-Säulen der Karosserie. Das Airbagmodul 7 besteht in allgemein bekannter Weise aus wenigstens einem Gasgenerator und einem Luftsack, der zusammengefaltet in einem Gehäuse 10 liegt. Üblicherweise befindet sich auch der Gasgenerator im dem Gehäuse 10, er kann allerdings auch an einer anderen Stelle, bspw. im Tragrohr 9 untergebracht sein.

Der obere, zur Rückseite 1 a der Instrumententafel 1 gerichtete Abschnitt des Gehäuses 10 weist eine Austrittsöffnung 10a für den Luftsack auf. Wie in Figur 2 erkennbar, liegt die Austrittsöffnung 10a innerhalb des Schusskanals 5, der wiederum das Gehäuse 10 lose umgreift, demnach am Gehäuse 10 nicht befestigt ist.

Ein Hakenteil 11 ist am Tragrohr 9 befestigt und erstreckt sich entlang des Gehäuses 10 in Richtung Rückseite Instrumententafel 1. Im Bereich der Verrastung 6 bildet das Hakenteil 11 eine abgewinkelte Stützfläche 11a, die mit Abstand dem Schrägverlauf der Verrastung 6 folgt. Die Stützfläche 11 a liegt dabei zwischen Verrastung 6 und Rückseite der Instrumententafel 1 bzw. der Abdeckung 3.

Bei der Montage wird zunächst das Airbagmodul 7 und das Hakenteil 11 auf dem Tragrohr 9 befestigt. Sodann wird die mit dem Schusskanal 5 komplettierte Instrumententafel 1 so aufgesetzt, dass sich der Schusskanal 5 über das Gehäuse 10 stülpt und die Verrastung 6 hinter der Stützfläche 11a zum Liegen kommt.

Beim Auslösen des Airbags entfaltet sich der Luftsack, geleitet durch den Schusskanal 5 in Richtung Instrumententafel 1 und versucht, die durch die Nut 4 geschwächte Abdeckung 3 aufzureißen. Wegen der hierzu notwendigen hohen Kräfte wölbt sich die Instrumententafel 1 vor dem Aufreißen in Richtung Fahrgastraum und nimmt den an ihr befestigten Schusskanal 5 mit. Dessen Verrastung 6 legt sich jedoch schon nach kurzer Wegstrecke an die Stützfläche 11a des Hakenteils 11 an, stützt sich daran ab und begrenzt auf diese Weise die Auswölbung der Instrumententafel. Der anfängliche Abstand zwischen der Stützfläche 11a und der Verrastung 6 ist dabei so gewählt, dass die Austrittsöffnung 10a danach noch innerhalb des Schusskanals 5 liegt. Es klafft daher keine Lücke zwischen Gehäuse 10 und Schusskanal 5, die es dem Luftsack ermöglichen könnte, sich teilweise seitlich hinter der Instrumententafel zu entfalten.

## Patentansprüche

1. Anordnung eines Airbagmoduls (7) hinter der Instrumententafel (1) eines Kraftfahrzeuges, bei der das Airbagmodul (7) wenigstens einen Gasgenerator und einen in einem Gehäuse (10) zusammengelegten Luftsack umfasst und bei der sich ein Schusskanal (5) vor dem Airbagmodul (7) befindet, der an der Rückseite (1 a) der Instrumententafel (1) befestigt ist und der den beim Auslösen des Airbags sich entfaltenden Luftsack führt, wobei im Bereich der Austrittsöffnung (10a) des Luftsacks der Schusskanal (5) das Airbagmodul lose umgreift und wobei der Schusskanal (5) als Rechteckkanal ausgebildet ist und mindestens an der Außenseite einer Kanalwand eine Verrastung (6) vorsieht, die bei montierter Instrumententafel (1) so hinter einem karosseriefesten Hackenteil (11, 11a) angeordnet ist, dass sie sich beim Entfalten des Luftsacks an dem Hackenteil (11, 11 a) abstützt, **dadurch gekennzeichnet, dass** die Verrastung (6) in Kanalrichtung schräg zur Rückseite der Instrumententafel (1) ansteigt und dass das Hakenteil (11) eine abgewickelte Stützfläche (11a) bildet, die bei montierter Instrumententafel (1) mit Abstand dem Schrägverlauf der Verrastung (6) folgt und sich zwischen der Verrastung (6) und der Rückseite (1a) der Instrumententafel (1) befindet.

2. Anordnung nach Anspruch 1, bei der das Airbagmodul an einem quer im Fahrzeug verlaufenden Tragrohr der vorderen Karosseriestruktur befestigt ist, **dadurch gekennzeichnet, dass** der Schusskanal (5) als Rechteckkanal ausgebildet und mindestens an der Außenseite einer Kanalwand die Verrastung (6) vorgesehen ist und dass das Hackenteil (11) am Tragrohr (9) befestigt ist.

3. Anordnung nach Anspruch 2, **dadurch gekennzeichnet, dass** das Hakenteil (11) einen als Abstützfläche (11a) dienenden Endabschnitt aufweist, der sich bei montierter Instrumententafel (1) zwischen der Verrastung (6) und der Rückseite (1a) der Instrumententafel (1) befindet.

## Claims

1. An arrangement of an airbag module (7) behind the instrument panel (1) of a motor vehicle, wherein the airbag module (7) comprises at least one gas generator and an airbag folded in a casing (10) and wherein a discharge duct (5) is situated in front of the airbag module (7) and fastened to the back (1a) of the instrument board (1) and guides the airbag when it unfolds after triggering, wherein the discharge duct (5) loosely surrounds the airbag module in the neighbourhood of the outlet opening (10a) of the airbag and wherein the discharge duct (5) is rectangular and, at least on the outside of a duct wall, has a locking means (6) which, when the instrument panel (1) is fitted, is so disposed behind a hook part (11, 11a) fixed to the body that when the airbag unfolds the locking means abuts the hook part (11, 11a), **characterised in that** the locking means (6) rises in the direction of the duct at an angle to the back of the instrument panel (1) and the hook part (11) forms an unwound abutting surface (11a) which follows the slope of the locking means (6) at a distance when the instrument panel (1) is fitted and is disposed between the locking means (6) and the back (1a) of the instrument panel (1).

2. An arrangement according to claim 1, wherein the airbag module is fastened to a tube bracing the front body structure and extending crosswise in the vehicle, **characterised in that** the discharge duct (5) is rectangular and the locking means is provided at least on the outside of a duct wall and the hook part (11) is fastened to the bracing tube (9).

3. An arrangement according to claim 2, **characterised in that** the hook part (11) has an end portion serving as a support surface (11a) and disposed between the locking means (6) and the back (1a) of the instrument panel (1) when the instrument panel (1) is installed.

## Revendications

1. Dispositif de montage d'un module de coussin gonflable de sécurité (7) derrière le tableau de bord (1) d'un véhicule automobile, dans lequel le module de coussin gonflable de sécurité (7) comprend au moins un générateur de gaz et une poche à air repliée dans un boîtier (10), avec, en avant du module de coussin gonflable de sécurité (7), un canal de projection (5) fixé à la face arrière (1a) du tableau de bord (1) et guidant la poche à air qui se déploie lors du déclenchement du coussin gonflable de sécurité, alors que, dans la région de l'ouverture de sortie (10a) de la poche à air, le canal de projection (5) entoure le coussin gonflable de sécurité sans serrage, le canal de projection (5) étant un canal rectangulaire avec, au moins sur le côté extérieur d'une paroi du canal, un accrochage (6) qui, lorsque le tableau de bord (1) est monté, est disposé derrière une partie en crochet (11, 11a), solidaire de la carrosserie, de manière à s'appuyer contre la partie en crochet (11, 11a) lors du déploiement de la poche à air,
**caractérisé en ce que**
vu selon la direction du canal, l'accrochage (6) remonte obliquement vers la face arrière du tableau de bord (1), et la partie en crochet (11) forme une surface d'appui coudée (11a) qui, lorsque le tableau de bord (1) est monté, suit à distance le profil incliné de l'accrochage (6) et se trouve entre l'accrochage (6) et la face arrière (1a) du tableau de bord (1).

2. Dispositif de montage selon la revendication 1, dans lequel le module de coussin gonflable de sécurité est fixé à un tube porteur de la structure avant de la carrosserie qui s'étend transversalement dans le véhicule,
**caractérisé en ce que**
le canal de projection (5) est réalisé sous la forme d'un canal rectangulaire et l'accrochage (6) est prévu au moins sur le côté extérieur d'une paroi du canal, et la partie en crochet (11) est fixée au tube porteur (9).

3. Dispositif de montage selon la revendication 2,
**caractérisé en ce que**
la partie en crochet (11) présente un segment terminal qui sert de surface d'appui (11a) et qui, lorsque le tableau de bord (1) est monté, se trouve entre l'accrochage (6) et la face arrière (1a) du tableau de bord (1).
